# EUROPEAN PATENT APPLICATION

(11) **EP 2 999 099 A1**
(43) Date of publication of application: **23.03.2016**
(21) Application number: 15151156.5
(22) Date of filing: 14.01.2015
(51) Int. Cl.: H02K 11/00, H02K 7/14, D06F 37/30

(54) **Electric drive system for a household appliance and household appliance**

(30) Priority: 07.08.2014 EP 14180272
(71) Applicant: E.G.O. Elektro-Gerätebau GmbH, 75038 Oberderdingen (DE)
(72) Inventor: Torres Sanchez, Antoni, 08520 Barcelona (ES)
(74) Representative: Patentanwälte Ruff, Wilhelm, Beier, Dauster & Partner mbB

(57) **Abstract**

An electric drive system (1) for a household appliance comprises: an electric motor (3), and a passive power factor correction coil (4), wherein the passive power factor correction coil (4) is mechanically coupled to an end shield of the electric motor (3) or the passive power factor correction coil (4) is arranged inside a housing (5) of the electric motor (3).

## Description

The invention relates to an electric drive system for a household appliance and to a household appliance.

It is the object of the invention to provide for an electric drive system for a household appliance and a household appliance being cost and energy efficient.

The invention solves this object by an electric drive system for a household appliance according to claim 1 and a household appliance according to claim 9.

The electric drive system is adapted to be used for a household appliance

The electric drive system comprises an, preferable brushless, electric motor and a passive power factor correction coil. The passive power factor correction coil may be conventionally adapted to reduce the input AC line harmonic current, such that a capacitive load, like a frequency converter, basically has the electrical properties of a linear load. The electric drive system may be adapted to cause a rotation of a washing machine drum or a dryer drum.

The passive power factor correction coil is mechanically coupled to an end shield of the electric motor. Alternatively the passive power factor correction coil is arranged inside a housing of the electric motor.

The combination of the power factor correction (PFC) coil and the electric motor, by integrating the PFC coil into the housing or at the end shield or back side of the motor, offers a more compact solution for motion tasks e.g. in washing machines.

The electric motor can be a 3 phase electric motor or a 1 phase electric motor.

The electric drive system may comprise a frequency converter (inverter), wherein the frequency converter is conventionally adapted to control the electric motor.

The frequency converter can be electrically connected to the electric motor and to the passive power factor correction coil by means of a connector assembly (pins, connector), preferably an electrical-wire-free connector assembly. For example the frequency converter may have a plug socket (female) for plugging in corresponding jacks (male) of the electric motor and the passive power factor correction coil.

Alternatively, the frequency converter and the passive power factor correction coil may be arranged inside the housing of the electric motor.

The frequency converter can be located on the back side of the electric motor, wherein the PFC coil is arranged inside the motor. This combination provides for an independent solution for washing machine drives, saving raw material and making the drive system more economic, compared with the prior art solutions.

The passive power factor correction coil may have a U, E, EI, or ring core shape coil design.

The passive power factor correction coil may be arranged inside the housing of the electric motor and may be mechanically coupled to the end shield of the electric motor by means of coil brackets, wherein the coil brackets are arranged inside the housing of the electric motor and are mechanically fixed or attached to the end shield.

The household appliance comprises a drivable, especially rotatable, functional unit, and an electric drive system according to any one of the preceding claims being adapted to drive, preferably rotate, the functional unit.

The functional unit may be a washing machine drum.

Alternatively, the functional unit may be a dryer drum, a fan, or a pump.

By integrating the PFC coil in the electric motor, electromagnetic compatibility properties are enhanced, since the motor control or frequency converter may be placed very close to the electric motor and the electrical connection can e.g. be implemented by means of pins or electrical connectors, so that connection wires between the motor and the frequency converter may be omitted.

By integrating the PFC coil inside the motor or arranging the PFC coil at the end shield and placing the frequency converter on the back side of the electric motor, a stand-alone drive solution can be provided because there is no need to include any other external components for driving purposes of the household appliance. The PFC coil inside the motor housing or body saves space inside a household appliance cabinet. Further, there is a wire and connector reduction cost, due to the fact that the frequency converter can be connected directly by a connector assembly in/at the back side or an end shield of the electric motor. Due to the fact that there are no connection wires between the PFC coil and the frequency converter, the amount of losses due to the Joule effect is reduced thus increasing energy efficiency.

The PFC Coil may be integrated in the motor body or housing or just be attached to the end shields by the outside part, depending on the machine model and design constraints. The PFC coil may be arranged inside the motor body or housing between a back side of a stator stack and a back end shield.

The PFC coil may be clamped by a number (e.g. two) of hooks that can be part of the back end shields, such that the PFC coil can just be pressed by means of the hooks.

The coil shape or design can be different depending on the manufacturing process and also depending on the application. E-I core shapes, U core shapes or also ring core shapes may be used. The coil shape can be made by two U cores, optimizing the amount of copper and iron.

According to the invention the power factor correction coil may be positioned inside the motor, inside the motor end shields, between the stator and the rear or front end shield, inside the housing, or between the rear end shield and the housing (motor cover).

The inverter, if any, can e.g. be positioned in between the end shield and the motor cover or housing.

The invention will now be described with respect to the attached drawings showing embodiments of the invention, wherein
- Fig. 1: schematically depicts an electric drive system according to a first embodiment,
- Fig. 2: schematically depicts an electric drive system according to a further embodiment,
- Fig. 3: schematically depicts a household appliance having an inventive drive system, and
- Fig. 4: schematically depicts a cross sectional view of an electric motor having a passive power factor correction coil mechanically coupled to an end shield.

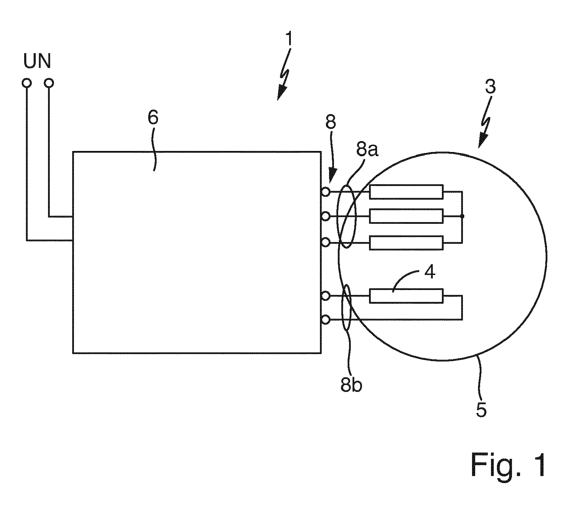

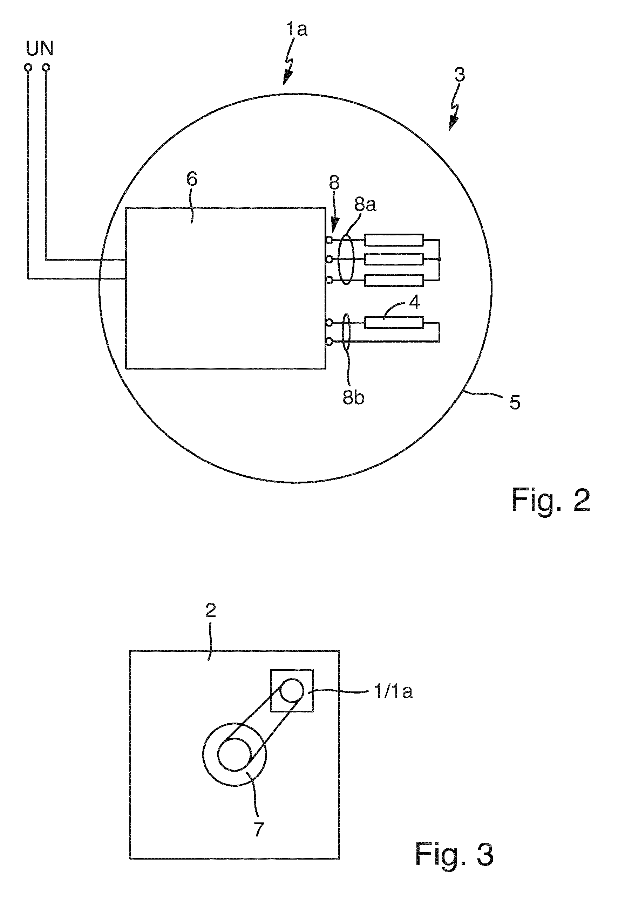

Fig. 1 depicts an electric drive system 1 for a household appliance 2 (see fig. 3). The electric drive system comprises a 3 phase electric motor and a passive power factor correction coil 4 having a U core shape coil design.

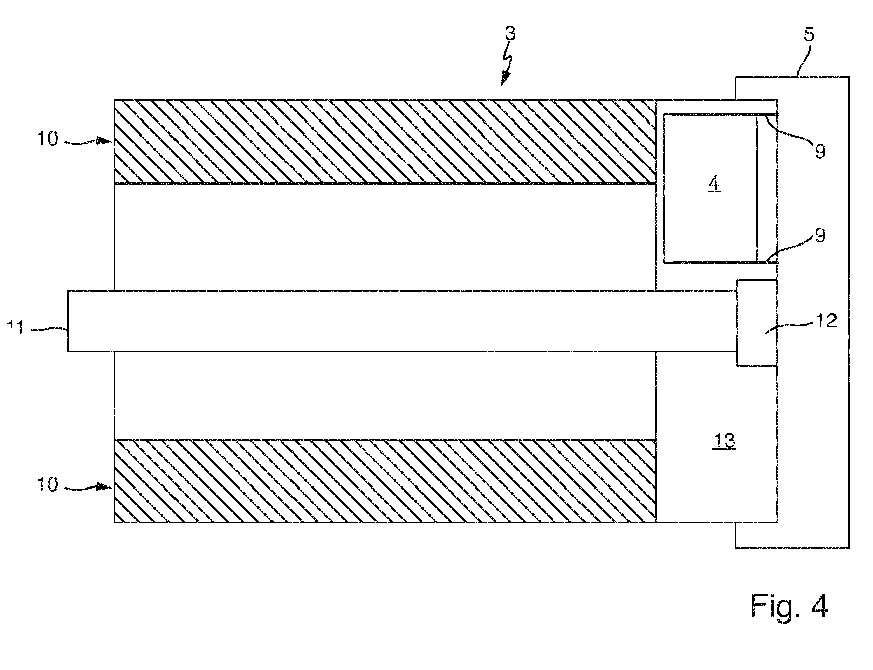

The passive power factor correction coil 4 is arranged inside a housing (or motor cover) 5 of the electric motor 3. A frequency converter 6 is mechanically coupled to an end shield 13 (see Fig. 4) of the electric motor 3 and is electrically coupled to the electric motor 3 and to the passive power factor correction coil 4 by means of a number (e.g. 5) of pins/electrical terminals forming an electrical-wire-free connector assembly 8. The frequency converter 6 is conventionally adapted to control the electric motor 3.

On the input side, the frequency converter 6 is electrically coupled to an AC mains voltage UN, wherein the AC mains voltage UN may be routed inside the frequency converter 6 to a part 8b of the electrical terminals or connector assembly 8 which is adapted to electrically contact the passive power factor correction coil 4.

The frequency converter 6 is conventionally adapted to generate three drive voltages output at a corresponding part 8a of the connector assembly 8. The drive voltages are conventionally generated such that e.g. a rotary speed of the electric motor 3 can be controlled, etc.

Fig. 2 schematically depicts an electric drive system 1a according to a further embodiment. In this embodiment the frequency converter 6 and the passive power factor correction coil 4 are placed inside the motor housing 5.

Fig. 3 schematically depicts a household appliance 2 in form of a washing machine having an inventive drive system 1 or 1a. The drive system 1 or 1 a is adapted to rotate a functional unit 7 in form of a washing machine drum.

Fig. 4 schematically depicts a cross sectional view of the electric motor 3 having the passive power factor correction coil 4 mechanically coupled to an end shield 13 of the electric motor 3.

The electric motor 3 conventionally comprises stator windings 10, a shaft 11, a bearing 12 supporting the shaft 11 and the end shield 13.

The passive power factor correction coil 4 is mechanically coupled to the end shield 13 of the electric motor 3 by means of coil brackets 9, the coil brackets 9 mechanically supporting the power factor correction coil 4. The power factor correction coil 4 may be simply clipped into the coil brackets 9. The power factor correction coil 4 may e.g. have a volume of approximately 42x42x16 mm³.

## Claims

1. Electric drive system (1) for a household appliance (2), the electric drive system (1) comprising:
- an electric motor (3), and
- a passive power factor correction coil (4),
**characterized in that**
- the passive power factor correction coil (4) is mechanically coupled to an end shield (13) of the electric motor (3) and/or the passive power factor correction coil (4) is arranged inside a housing (5) of the electric motor (3).

2. Electric drive system (1) according to claim 1, **characterized in that**
- the electric motor (3) is a 3 phase electric motor.

3. Electric drive system (1) according to claim 1 or 2, **characterized in that**
- the electric drive system (1) comprises a frequency converter (6), wherein the frequency converter (6) is adapted to control the electric motor (3).

4. Electric drive system (1) according to claim 3, **characterized in that**
- the frequency converter (6) is electrically connected to the electric motor (3) and to the passive power factor correction coil (4) by means of a connector assembly (8).

5. Electric drive system (1) according to claim 3 or 4, **characterized in that**
- the frequency converter (6) and the passive power factor correction coil (4) are arranged inside the housing (5) of the electric motor (3).

6. Electric drive system (1) according to any one of the preceding claims, **characterized in that**
- the passive power factor correction coil (4) has a U, E, or EI core shape coil design.

7. Electric drive system according to any one of claims 1 to 5, **characterized in that**
- the passive power factor correction coil (4) has a ring core shape coil design.

8. Electric drive system (1) according to any one of the preceding claims, **characterized in that**
- the passive power factor correction coil (4) is mechanically coupled to the end shield (13) of the electric motor (3) by means of coil brackets (9).

9. Household appliance (2), comprising:
- a drivable, especially rotatable, functional unit (7), and
- an electric drive system (1) according to any one of the preceding claims being adapted to drive the functional unit (7).

10. Household appliance according to claim 9, wherein
- the functional unit (7) is a washing machine drum.

11. Household appliance (2) according to claim 9, wherein
- the functional unit is a dryer drum.

12. Household appliance (2) according to claim 9, wherein
- the functional unit is a fan.

13. Household appliance (2) according to claim 9, wherein
- the functional unit is a pump.
